# EUROPÄISCHE PATENTSCHRIFT

(11) **EP 0 911 103 B1**
(45) Veröffentlichungstag und Bekanntmachung des Hinweises auf die Patenterteilung: **04.12.2002**
(21) Anmeldenummer: 98811043.3
(22) Anmeldetag: 20.10.1998
(51) Int. Cl.: B23C 5/10, B23B 31/40

(54) **Bearbeitungswerkzeug**
Machining tool
Outil d'usinage

(30) Priorität: 22.10.1997 EP 97810787
(43) Veröffentlichungstag der Anmeldung: 28.04.1999
(73) Patentinhaber: FRAISA SA, 4512 Bellach (CH)
(72) Erfinder: Schmid, Konrad, 4514 Lommiswil (CH)
(74) Vertreter: Patentanwälte Breiter + Wiedmer AG

(56) Entgegenhaltungen:
- DE-A- 3 146 005
- DE-B- 1 017 882
- DE-U- 8 223 278
- FR-A- 2 166 564

## Beschreibung

Die Erfindung betrifft ein Bearbeitungswerkzeug nach dem Oberbegriff von Anspruch 1.

Zur auswechselbaren Befestigung eines Bearbeitungswerkzeugs wie beispielsweise eines Fräsers, Bohrers oder Gewindeschneiders auf einem zum Einspannen in eine Spindel einer Bearbeitungsmaschine vorgesehenen Halterungsteil ist es bekannt, das Bearbeitungswerkzeug über ein an dessen Rückseite integral angeformtes Schraubengewinde in eine im Halterungsteil zentral angeordnete Gewindebohrung einzusetzen und mit einem Schraubenschlüssel festzuziehen. Bei einer anderen Befestigungsart wird das Bearbeitungswerkzeug über eine axiale Bohrung durch den Werkzeugkopf hindurch mit dem Halterungsteil verschraubt.

Ein Bearbeitungswerkzeug der eingangs genannten Art ist aus der FR-A-2 166 564 bekannt.

Ein wesentlicher Nachteil der beiden vorstehend erwähnten Verbindungen zwischen Bearbeitungswerkzeug und Halterungsteil liegt darin, dass häufig eine Unwucht auftritt und sich hieraus Probleme mit dem Rundlauf ergeben. Die Verschraubung durch den Werkzeugkopf ist zudem bei zentrumschneidenden Werkzeugen nicht möglich.

Der Erfindung liegt daher die Aufgabe zugrunde, die Befestigung eines Bearbeitungswerkzeugs an einem Halterungsteil so auszugestalten, dass Unwuchtprobleme nicht auftreten. Zudem soll das Bearbeitungswerkzeug einfach und schnell auswechselbar sein. Ein weiteres Ziel ist die universelle Verwendung eines Halterungsteils für verschiedenartige Bearbeitungswerkzeuge, d.h. d Schaffung eines modularen Systems.

Zur erfindungsgemässen Lösung der Aufgabe führt ein Bearbeitungswerkzeug mit den Merkmalen von Anspruch 1.

Mit der erfindungsgemässen Anordnung ergibt sich im Befestigungsbereich des Bearbeitungswerkzeugs und des Halterungsteils ein symmetrischer Aufbau mit einer gegenüber vorbekannten Lösungen wesentlichen Masseverminderung. Auch bei der Anwendung hoher Drehzahlen läuft das Bearbeitungswerkzeug rund und wird durch die rückwärtige Befestigung über die Zug- oder Druckstange im Halterungsteil in festem Sitz gehalten.

Zweckmässigerweise ist die Innenfläche des Aufnahmedomes gegen sein freies Ende hin konisch erweitert und bildet eine Auflage für das erweiterte Ende der Zug- oder Druckstange, welches der konischen Erweiterung des Aufnahmedomes entsprechend ebenfalls konisch erweitert sein kann.

Bei einer bevorzugten Ausgestaltung des erweiterten Endes der Zug- oder Druckstange ist dieses als Ringwulst ausgebildet. Die sich daraus ergebende punktförmige Auflage auf der Konusfläche des Aufnahmedornes hat gegenüber der flächigen Auflage den Vorteil, dass dieser Bereich der Zug- oder Druckstange keinen hohen Präzisionsaufwand erfordert, wodurch die Gestehungskosten gesenkt werden können.

Für einen optimalen Sitz des Schaftteils auf dem Aufnahmedorn kann es sich als vorteilhaft erweisen, die Innenfläche des Schaftteils als schwachen, gegen den Halterungsteil hin sich verengenden Konus auszubilden.

Obschon die Reibschlussverbindung zwischen der Umfangfläche des Aufnahmedornes und der Innenfläche des Schaftteils für die meisten Bearbeitungswerkzeuge und -arten ausreichend sein dürfte, kann eine zusätzliche Verdrehsicherung in der Form wenigstens eines zwischen dem Halterungsteil und dem Schaftteil angeordneten Verbindungselementes vorgesehen sein. Bei einer bevorzugten Verdrehsicherung greifen in Bohrungen stirnseitig im Halterungsteil eingesetzte Stifte in stirnseitig im Schaftteil angeordnete Ausnehmungen oder Nuten ein.

Die Aufspannung des Bearbeitungswerkzeugs auf dem Halterungsteil erfolgt im einfachsten Fall über eine Mutter, die einem einends an der Zug- oder Druckstange angeordneten Gewinde aufgesetzt ist und als Gegenanschlag dient. Zur Sicherung der Mutter gegen unbeabsichtigtes Lösen wird zweckmässigerweise eine in einem Gewinde im Halterungsteil geführte Konterschraube eingesetzt.

Bei einer besonders vorteilhaften Anordnung der Schraubeinrichtung weisen sowohl die Mutter als auch die Konterschraube ein Innenvielkant auf, wobei das Innenvielkant der Mutter ohne Behinderung durch die Konterschraube hindurch bedienbar ist. Als Innenvielkant ist ein übliches Innensechskant bevorzugt, jedoch sind auch andere Ausführungsformen wie z.B. ein Innenvierkant oder -achtkant denkbar.

Bei dieser Anordnung kann das Bearbeitungswerkzeug auf einfache Weise ausgewechselt werden, da sich durch Drehung der Mutter die Zug- oder Druckstange gegen das Bearbeitungswerkzeug hin bewegt, wodurch sich die Reibschlussverbindung löst. Mit der erfindungsgemässen Befestigung des Bearbeitungswerkzeugs am Halterungsteil ergibt sich ein modulares System, das insbesondere zur schnellen und einfachen Aufspannung von Fräsern, Bohrern und Gewindeschneidern geeignet ist.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schematisch in
- Fig. 1: einen Längsschnitt durch einen Halterungsteil mit aufgesetztem Bearbeitungswerkzeug;
- Fig. 2: einen Längsschnitt durch den Halterungsteil der Anordnung von Fig. 1;
- Fig. 3: einen Längsschnitt durch die Zugstange der Anordnung von Fig. 1.

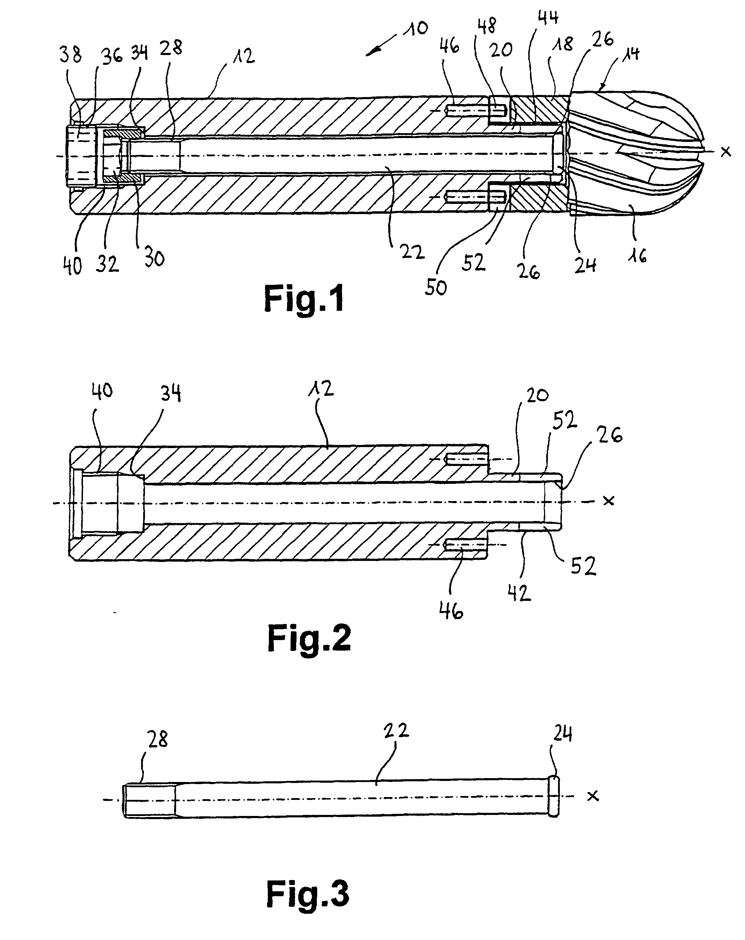

Ein in Fig. 1 dargestelltes modulares Fräser-System 10 zum Einspannen in eine aus Gründen der besseren Uebersicht in der Zeichnung nicht wiedergegebene Spindel einer Fräsmaschine weist einen im wesentlichen rohrförmigen Halterungsteil 12 auf, welcher eine Werkzeugachse x definiert. Dem Halterungsteil 12 ist ein Fräser oder allgemein ein Bearbeitungswerkzeug 14 in der Werkzeugachse x aufgesetzt.

Das Bearbeitungswerkzeug 14 weist einen vom eigentlichen Bearbeitungskopf 16 abragenden hohlzylindrischen Schaftteil 18 auf, der einen vom Halterungsteil 12 zentrisch abragenden Aufnahmedorn 20 übergreift.

Eine Zugstange 22 durchsetzt das Halterungsteil 12 und den Aufnahmedorn 20. Die Zugstange 22 ist an ihrem dem Bearbeitungswerkzeug 14 benachbarten Ende mit einem Ringwulst 24 versehen, welcher der Innenfläche des Aufnahmedornes 20 im Bereich seines freien Endes gleitend anliegt. Der Aufnahmedorn 20 ist in diesem Auflagebereich des Ringwulstes gegen sein offenes Ende hin mit einer konischen Erweiterung 26 versehen. Zum besseren Verständnis des Aufbaus des modularen Systems 10 sind der Halterungsteil 12 und die Zugstange in den Fig. 2 und 3 einzeln dargestellt.

An ihrem dem Ringwulst 24 entgegengesetzten Ende ist die Zugstange 22 mit einem Gewinde 28 versehen. Eine Mutter 30 mit einem Innensechskant 32 ist auf das gewindeseitige Ende der Zugstange 22 aufgeschraubt und liegt beim Aufbringen einer Zugspannung einer Anschlagfläche 34 am Halterungsteil 12 an. Die durch das Anziehen der Mutter 30 erzeugte Zugspannung zieht den Ringwulst 24 entlang der konischen Erweiterung 26 in den Aufnahmedorn 20 hinein, wodurch dieser gedehnt wird uns sich mit seiner Umfangfläche 42 der Innenfläche 44 des Schaftteils 18 unter Bildung einer Reibschlussverbindung flächig anlegt. Die Innenfläche 44 ist zur Optimierung des Sitzes zwischen Bearbeitungswerkzeug 14 und Halterungsteil 12 gegen den Kopf 16 hin schwach konisch erweitert.

Die zur Aufweitung des Aufnahmedornes 20 erforderliche Dehnung kann durch eine entsprechend geringe Wandstärke des Aufnahmedornes bereitgestellt werden. Eine andere einfache Möglichkeit ergibt sich durch das Anbringen von beispielsweise vier Längsschlitzen 52.

Zur Sicherung der Mutter 30 gegen unbeabsichtigtes Lösen ist eine Konterschraube 36 vorgesehen, die in ein Innengewinde 40 im Halterungsteil 12 eingreift. Die Konterschraube 36 ist mit einem durchgehenden Innensechskant 38 versehen, welches einen grösseren Durchmesser aufweist als das Innensechskant 32 der Mutter 30, sodass diese ohne Behinderung durch die Konterschraube 36 hindurch bedient werden kann. Mit dieser Anordnung lässt sich das Bearbeitungswerkzeug 14 mühelos vom Halterungsteil 12 abnehmen, da durch Drehen der durch die Konterschraube 36 abgestützten Mutter 30 eine Bewegung der Zugstange 22 in Richtung des Bearbeitungswerkzeuges 14 erfolgt, wodurch sich die Reibschlussverbindung zwischen der Innenfläche 44 des Schaftteils 18 und der Umfangfläche 42 des Aufnahmedornes 20 löst.

Als weitere Verdrehsicherung des Bearbeitungswerkzeuges 14 auf dem Halterungsteil 12 ist zwischen den beiden Teilen ein diese überbrückendes Verbindungsteil angeordnet. Hierzu sind im Halterungsteil 12 von dessen Stirnseite ausgehende Bohrungen 46 zur Aufnahme von die Stirnseite des Halterungsteils 12 um wenige Millimeter überragenden Stiften 48 vorgesehen. Zur Aufnahme der Stifte 48 im Bearbeitungswerkzeug 14 sind in der Stirnseite des Schaftteils 18 entsprechende Ausnehmungen bzw. Nuten 50 eingearbeitet. An Stelle der Nuten 50 können auch Bohrungen vorgesehen sein.

## Patentansprüche

1. Bearbeitungswerkzeug mit einem Halterungsteil zum Einspannen in eine Spindel einer Bearbeitungsmaschine, wobei das Bearbeitungswerkzeug (14) einen Kopf (16) und einen hohlzylindrischen Schaftteil (18) aufweist, am Halterungsteil (12) auswechselbar befestigt und an diesem über eine Zug- oder Druckstange (22) gegengelagert ist, und wobei das dem Bearbeitungswerkzeug (14) zugewandte Ende der Zug- oder Druckstange (22) erweitert ist und unter Einwirkung einer Zug- oder Druckspannung zu einer Aufweitung eines Aufnahmedomes (20) führt, wodurch die Umfangfläche (42) des Aufnahmedomes (20) und die Innenfläche (44) des Schaftteils (18) unter Ausbildung einer Reibschlussverbindung gegeneinander verspannt sind, wobei das Bearbeitungswerkzeug (14) mit dem hohlzylindrischen Schaftteil (18) den Aufnahmedom (20) am Halterungsteil (12) übergreift und über die das Halterungsteil (12) und den Aufnahmedom (20) durchsetzende Zugoder Druckstange (22) mittels einer am Halterungsteil (12) gegengelagerten, eine Zug- oder Druckspannung erzeugenden Schraubeinrichtung (28, 30) am Halterungsteil (12) fixiert ist
**dadurch gekennzeichnet, dass**
der Aufnahmedorn (20) einstückig am Halterungsteil (12) angeformt ist, und der Kopf (16) des Bearbeitungswerkzeuges (14) keine durchgehende Bohrung aufweist, so dass die Befestigung des Bearbeitungswerkzeuges am Halterungsteil von der Rückseite des Bearbeitungswerkzeuges erfolgt.

2. Bearbeitungswerkzeug nach Anspruch 1, **dadurch gekennzeichnet, dass** die Innenfläche des Aufnahmedomes (20) gegen sein freies Ende hin konisch erweitert ist und eine Auflage für das erweiterte Ende der Zugoder Druckstange (22) bildet.

3. Bearbeitungswerkzeug nach Anspruch 2, **dadurch gekennzeichnet, dass** das erweiterte Ende der Zug- oder Druckstange (22) der konischen Erweiterung (26) des Aufnahmedomes (20) entsprechend konisch erweitert oder als Ringwulst (24) ausgebildet ist.

4. Bearbeitungswerkzeug nach einem der Ansprüche 1 bis 3, **dadurch gekennzeichnet, dass** der Aufnahmedom (20) zur Unterstützung seiner Aufweitung wenigstens einen Längsschlitz (52) aufweist.

5. Bearbeitungswerkzeug nach einem der Ansprüche 1 bis 4, **dadurch gekennzeichnet, dass** die Innenfläche (44) des Schaftteils (18) gegen den Halterungsteil (12) hin konisch verengt ist.

6. Bearbeitungswerkzeug nach einem der Ansprüche 1 bis 5, **dadurch gekennzeichnet, dass** zwischen dem Halterungsteil (12) und dem Schaftteil (18) wenigstens ein Verbindungselement als Verdrehsicherung angeordnet ist, wobei vorzugsweise in Bohrungen (46) stirnseitig im Halterungsteil (12) eingesetzte Stifte (48) in stimseitigem Schaftteil (18) angeordnete Ausnehmungen oder Nuten (50) eingreifen.

7. Bearbeitungswerkzeug nach einem der Ansprüche 1 bis 6, **dadurch gekennzeichnet, dass** die Zug- oder Druckstange (22) einends mit einem Gewinde (28) und einer diesem zur Erzeugung der Zug- oder Druckspannung aufgesetzten Mutter (30) als Gegenanschlag versehen ist.

8. Bearbeitungswerkzeug nach Anspruch 7, **dadurch gekennzeichnet, dass** die Mutter (30) mit einer in einem Gewinde (40) im Halterungsteil (12) geführten Konterschraube (36) gesichert ist.

9. Bearbeitungswerkzeug nach Anspruch 8, **dadurch gekennzeichnet, dass** die Mutter (30) und die Konterschraube (36) ein Innenvielkant (32, 38) aufweisen, wobei das Innenvielkant (32) der Mutter (30) ohne Behinderung durch die Konterschraube hindurch bedienbar ist.

10. Verwendung des Bearbeitungswerkzeugs (14) und des Halterungsteils (12) nach einem der Ansprüche 1 bis 9 als modulares Fräser-, Bohrer- und Gewindeschneider-System.

## Claims

1. Machining tool with a holder part for clamping in a spindle of a turning machine, where the machining tool (14) has a head (16) and a hollow cylindrical shaft part (18), which is exchangeably attached to the holder part (12) and counter-mounted on this by way of a tension or pressure rod (22), and where the end of the tension or pressure rod (22) facing the machining tool (14) is expanded and under the effect of a tension or pressure force leads to an expansion of a receiving mandrel (20), whereby the peripheral surface (42) of the receiving mandrel (20) and the inner surface (14) of the shaft part (18) are clamped together forming a friction connection, where the machining tool (14) with the hollow cylindrical shaft part (18) reaches over the receiving mandrel (20) on the holder part (12) and is fixed to the holder part (12) by way of the tension and pressure rod (22) passing through the holder part (12) and the receiving mandrel (20) by means of a screw device (28, 30) generating a tension or pressure force and counter-mounted on the holder part (12), **characterised in that** the head (16) of the machining tool (14) does not have a through bore so that the machining tool is fixed to the holder part from the rear of the machining tool.

2. Machining tool according to claim 1, **characterised in that** the inner surface of the receiving mandrel (20) is expanded conically towards its free end and forms a support for the expanded end of the tension or compression rod (22).

3. Machining tool according to claim 2, **characterised in that** the expanded end of the tension or compression rod (22) is formed conically expanded or as an annular ring (24) corresponding to the conical expansion (26) of the receiving mandrel (20).

4. Machining tool according to any of claims 1 to 3, **characterised in that** the receiving mandrel (20) has at least one longitudinal slot (52) to support its expansion.

5. Machining tool according to any of claims 1 to 4, **characterised in that** the inner surface (44) of the shaft part (18) is conically tapered towards the holder part (12).

6. Machining tool according to any of claims 1 to 5, **characterised in that** between the holder part (12) and the shaft part (18) is arranged at least one connecting element as security against twisting, where preferably pins (48) inserted in bores (46) in the face of the holder part (12) engage in recesses or grooves (50) arranged in the face of the shaft part (18).

7. Machining tool according to any of claims 1 to 6, **characterised in that** the tension or compression rod (22) has a thread (28) at one end and a nut (30) placed on this as a counter stop to generate the tension or compression force.

8. Machining tool according to claim 7, **characterised in that** the nut (30) is locked with a lock screw (36) guided in a thread (40) in the holder part (12).

9. Machining tool according to claim 8, **characterised in that** the nut (30) and the lock screw (36) have polygonal sockets (32, 38) where the polygonal socket (32) of the nut (30) can be operated without hindrance through the lock screw.

10. Use of machining tool (14) and the holder part (12) according to any of claims 1 to 9 as a modular milling cutter, drill and thread cutting system.

## Revendications

1. Outil d'usinage comportant une partie de support pour la fixation dans un arbre d'une machine d'usinage, dans lequel ledit outil d'usinage (14) comporte une tête (16) et une partie d'arbre cylindrique creux (18), est fixé de manière amovible sur la partie de support (12) et est fixé, en contre-butée, sur la partie de support (12), par l'intermédiaire d'une tige de tirage ou de pression (22), dans lequel l'extrémité de la tige de tirage ou de pression (22) qui est dirigée vers l'outil d'usinage (14) est élargie et conduit, sous l'influence de la tension de tirage ou de pression, à un élargissement d'un mandrin de réception (20), grâce à quoi la surface périphérique (42) du mandrin de réception (20) et la surface intérieure (44) de la partie d'arbre (18) sont déformées l'une contre l'autre en formant une liaison de fermeture à friction et dans lequel l'outil d'usinage (14) s'accroche, par la partie d'arbre cylindrique creux (18), dans le mandrin de réception (20), sur la partie de support (12) et est fixé sur la partie de support (12), par l'intermédiaire de la tige de tirage (22) qui traverse la partie de support (12) et le mandrin de réception (20), au moyen d'un dispositif à vissage (28, 30) qui est disposé en contre-butée sur la partie de support (12) et qui produit une tension de tirage ou de pression,
**caractérisé en ce que**
le mandrin de réception (20) est formé en une seule pièce sur la partie de support (12) et la tête (16) de l'outil d'usinage (14) ne comporte pas de perçage traversant de telle sorte que la fixation de l'outil d'usinage (14) sur la partie de support (12) est réalisée à partir de la face arrière de l'outil d'usinage (14).

2. Outil d'usinage selon la revendication 1, **caractérisé en ce que** la surface intérieure du mandrin de réception (20) est élargie de manière conique en direction de son extrémité libre et forme une surface d'appui pour l'extrémité élargie de la tige de tirage ou de pression (22).

3. Outil d'usinage selon la revendication 2, **caractérisé en ce que** l'extrémité élargie de la tige de tirage ou de pression (22) est élargie de manière conique en correspondance avec la partie élargie conique (26) du mandrin de réception (20) ou est réalisée sous la forme d'un bourrelet annulaire (24).

4. Outil d'usinage selon l'une quelconque des revendications 1 à 3, **caractérisé en ce que** le mandrin de réception (20) comporte au moins une fente longitudinale (52) pour supporter sa partie élargie.

5. Outil d'usinage selon l'une quelconque des revendications 1 à 4, **caractérisé en ce que** la surface intérieure (44) de la partie d'arbre (18) est rétrécie de manière conique en direction de la partie de support (12).

6. Outil d'usinage selon l'une quelconque des revendications 1 à 5, **caractérisé en ce que**, entre la partie de support (12) et la partie d'arbre (18), un élément de liaison est disposé en tant que sécurité contre la rotation, des broches (48), qui sont engagées, de préférence, dans des perçages (46) ménagés dans la face frontale de la partie de support (12), s'engageant dans des évidements ou des encoches (50) qui sont disposées dans la face frontale de la partie d'arbre (18).

7. Outil d'usinage selon l'une quelconque des revendications 1 à 6, **caractérisé en ce que** la tige de tirage ou de pression (22) est munie, à l'une de ses extrémités, d'un filetage (28) et d'un écrou (30) qui est engagé sur ce dernier pour produire la tension de tirage ou de pression et qui sert de contre-butée.

8. Outil d'usinage selon la revendication 7, **caractérisé en ce que** l'écrou (30) est bloqué par une contre-vis (36) qui est guidée dans un filetage (40) ménagé dans la partie de support (12).

9. Outil d'usinage selon la revendication 8, **caractérisé en ce que** l'écrou (30) et la contre-vis (36) comportent une empreinte cannelée (32, 38), l'empreinte cannelée (32) de l'écrou (30) pouvant être utilisée sans gêne à travers la contre-vis (36).

10. Utilisation de l'outil d'usinage (14) et de la partie de support (12) selon l'une quelconque des revendications 1 à 9 en tant que système modulaire de fraise, de foret ou d'outil de taraudage.
